# EUROPÄISCHE PATENTSCHRIFT

(11) **EP 1 067 479 B1**
(45) Veröffentlichungstag und Bekanntmachung des Hinweises auf die Patenterteilung: **17.09.2003**
(21) Anmeldenummer: 99112551.9
(22) Anmeldetag: 01.07.1999
(51) Int. Cl.: G06T 17/00, G06F 17/60

(54) **Verfahren und System zur virtuellen Erstellung eines aus mehreren Bauteilen bestehenden Produkts**
Method and system for the virtual manufacture of a product composed of different parts
Procedé et système pour la fabrication virtuelle d'un produit comportant plusieurs parties

(43) Veröffentlichungstag der Anmeldung: 10.01.2001
(73) Patentinhaber: Teraport GmbH, 70499 Stuttgart (DE)
(72) Erfinder: Koytek, Thomas, 83607 Holzkirchen (DE); Todd, Christian, 81541 München (DE); Rüchardt, Dominik, 80638 München (DE); Gaigl, Hermann, 85669 Pastetten (DE)
(74) Vertreter: Banzer, Hans-Jörg, Dipl.-Ing.

(56) Entgegenhaltungen:
- EP-A- 0 290 809
- US-A- 5 613 049
- US-A- 5 864 482
- CHANG M ET AL: "Modeling the assembly of compliant, non-ideal parts" COMPUTER AIDED DESIGN,GB,ELSEVIER PUBLISHERS BV., BARKING, Bd. 29, Nr. 10, Seite 701-708 XP004094875 ISSN: 0010-4485
- PARK S ET AL: "Verification of assemblability between toleranced parts" COMPUTER AIDED DESIGN,GB,ELSEVIER PUBLISHERS BV., BARKING, Bd. 30, Nr. 2, Seite 95-104 XP004116606 ISSN: 0010-4485

## Beschreibung

Die vorliegende Erfindung betrifft ein Verfahren nach dem Oberbegriff des Anspruches 1 und ein entsprechendes System nach dem Oberbegriff des Anspruches 8 zur Erstellung eines aus mehreren Bauteilen bestehenden Produkts.

Die Entwicklung komplex aufgebauter Produkte, wie beispielsweise eines Kraftfahrzeugs oder Flugzeugs, ist sehr langwierig und kostspielig. Ein wesentliches Problem bei der Entwicklung derartiger Produkte besteht darin, daß sie aus einer Vielzahl von unterschiedlichen Bauteilen aufgebaut sind, die in der Regel an unterschiedlichen Stellen konstruiert werden. Um die tatsächliche Funktionsfähigkeit des Gesamtprodukts überprüfen zu können, wurde früher ein Modell des Gesamtprodukts im Maßstab 1:1 nachgebaut. Diese Vorgehensweise ist jedoch sehr teuer und zeitintensiv und besitzt zudem den Nachteil, daß ein kaum veränderbares Modell geschaffen wird, d.h. der Funktionstest ist auf die konkrete Ausgestaltung der einzelnen Bauteile beschränkt.

Heutzutage wird die Entwicklung von komplex aufgebauten Produkten durch die moderne CAD-Technik (Computer Aided Design) erleichtert. Im Entwicklungsprozeß werden die einzelnen Bauteile oder Bauteilgruppen in Übereinstimmung mit bestimmten Vorgaben an ihre Funktion und ihr Design rechnergestützt konstruiert, wobei hierzu beim Hersteller, beim Systemlieferanten und seinen Zulieferern nahezu zeitgleich eine Unmenge von dreidimensionalen CAD-Modellen (3D-CAD-Modellen) erstellt werden. Diese digitalen Modelle werden im Anschluß an die Konstruktion gefertigt und zu einem physikalischen Prototypen verbaut. Da die Fertigung auf detaillierte, nahezu perfekt konstruierte Pläne und Modelle angewiesen ist, wurde von den Konstrukteuren über Jahrzehnte hinweg verlangt, nur solche Modelle weiterzugeben, welche diesen Anforderungen entsprechen. Bis zu diesem Zeitpunkt ist die Arbeitsweise sehr stark einzelteilorientiert, d.h. der Konstrukteur erstellt sein Bauteil oder seine Baugruppe als Teil des Gesamtprodukts, ohne jedoch eine Aussage darüber machen zu können, ob die geometrische Stimmigkeit im Gesamtprodukt zu 100% abgesichert ist. Es können lediglich stichpunktartige, visuelle Kontrollen zur Produktstimmigkeit durchgeführt werden. Werden jedoch in dieser Phase Fehler, welche eine konstruktive Änderung eines Bauteils zur Folge haben, nicht gefunden, werden diese Fehler im weiteren Prozeßverlauf auf die physikalischen Bauteile übertragen. Erst beim Zusammenbau der Einzelteile zum realen Prototypen werden diese Probleme sichtbar und können somit erst in einer relativ späten Entwicklungsphase behoben werden. Diese Unsicherheit im Entwicklungsprozeß kann unter Umständen viel Geld kosten, da eine Serienproduktion erst dann möglich ist, wenn sämtliche Probleme oder Fehler behoben und alle Test abgeschlossen worden sind.

Auch die Informationsbeschaffung, die in der Konstruktion einen nicht unwesentlichen Zeitaufwand darstellt, ist ein nicht zu unterschätzender Kostenfaktor. Jeder Konstrukteur ist durchschnittlich 10-20% seiner Arbeitszeit damit beschäftigt, Informationen beispielsweise über die Konstruktionsumgebung, in der er sein Bauteil plazieren muß, zu beschaffen. Durch sogenanntes 'Simultaneous Engineering' kann zwar die Konstruktionszeit insgesamt reduziert werden. Gleichzeitig wird jedoch dadurch auch ein drastischer Anstieg der Informationsmenge hervorgerufen, so daß der Konstrukteur entweder noch mehr Zeit zur Informationsbeschaffung aufwenden oder aber mit der Unsicherheit leben muß, daß die ihm augenblicklich bekannte Konstruktionsumgebung sehr schnell veraltet ist.

Erfahrungsgemäß erhöht sich die Anzahl der oben beschriebenen Probleme mit zunehmender Komplexität des jeweiligen Produkts. Die Schleife vom physikalischen Prototypen zurück zur Konstruktion, welche viel Zeit und Kosten benötigt, muß bis zum Erreichen des gewünschten Ergebnisses mehrmals durchlaufen werden.

Um diese Probleme zu mindern, wurde die sogenannte Digital Mockup-Technik (DMU) entwickelt. Während sich CAD-Systeme auf einzelne Bauteile beziehen, erzeugen DMU-Systeme digitale Abbilder (sogenannte digital Mockups) des Gesamtprodukts, d.h. es werden alle auf CAD-Systemen konstruierten Bauteile miteinander zu einem digitalen Prototypen kombiniert, der nach seiner Fertigstellung auf bestimmte Eigenschaften getestet werden kann. Durch die Digitalisierung des Gesamtprodukts im CAD-System wird zwar eine nicht unwesentliche Beschleunigung des Entwicklungsprozesses erzielt, es bleibt jedoch weiterhin das Problem bestehen, daß Fehler erst nach Fertigstellung des Prototypen, d.h. nach Abschluß der eigentlichen Konstruktion ermittelt werden können. Der Wettbewerb auf globaler Ebene wird jedoch immer härter. Zur Sicherung der eigenen Wettbewerbsfähigkeit ist es daher erforderlich, die Entwicklungskosten und die für die Entwicklung benötigte Zeit immer weiter zu senken.

Der vorliegenden Erfindung liegt daher die Aufgabe zugrunde, die zuvor beschriebene und dem Oberbegriff der Ansprüche 1 und 8 zugrundeliegende Technik der Erstellung eines digitalen Abbilds eines Gesamtprodukts derart auszugestalten, daß das komplex aufgebaute Gesamtprodukt bzw. dessen Einzel- oder Bauteile effektiver, d.h. kostengünstiger und innerhalb einer kürzeren Zeit, entwickelt bzw. konstruiert werden können, wobei gleichzeitig eine hohe Qualität des Gesamtprodukts gewährleistet sein soll.

Diese Aufgabe wird erfindungsgemäß durch ein Verfahren mit den Merkmalen des Anspruches 1 bzw. ein System mit den Merkmalen des Anspruches 8 gelöst. Die Unteransprüche definieren jeweils bevorzugte und vorteilhafte Ausführungsformen der vorliegenden Erfindung.

Auch erfindungsgemäß werden die einzelnen Bauteile eines Produkts rechnergestützt konstruiert und somit für jedes Bauteil digitale Bilddaten erzeugt, welche die augenblickliche Konstruktion dieses Bauteils beschreiben. Die digitalen Bilddaten können insbesondere 3D-CAD-Daten handelsüblicher CAD-Systeme sein. Die Besonderheit der vorliegenden Erfindung besteht darin, daß noch während der Konstruktionsphase, d.h. vor der endgültigen Fertigstellung der einzelnen Bauteile und des Gesamtprodukts, die den augenblicklichen Konstruktionen der einzelnen Bauteile entsprechenden digitalen Bilddaten automatisch gesammelt und zu einer digitalen Abbildung des Gesamtprodukts zusammengefügt werden, um anschließend ebenfalls automatisch die einzelnen Bauteile in Bezug auf die somit erstellte digitale Abbildung des Gesamtprodukts zu verifizieren. Die Erstellung der digitalen Abbildung des Gesamtprodukts sowie die Verifizierung der Paßform und Lage der einzelnen Bauteile erfolgt vorteilhafterweise in regelmäßigen Abständen.

Da die einzelnen Bauteile des zu entwickelnden Produkts an unterschiedlichen CAD-Systemen konstruiert und somit in unterschiedlichen Datenformaten vorliegenden können, werden diese unterschiedlichen Datenformate in ein neutrales, angenähertes Datenformat umgesetzt, welches zur Beschreibung der digitalen Abbildung des Gesamtprodukts verwendet wird. Dieses angenäherte Datenformat wird dadurch erhalten, daß die einzelnen CAD-Modelle trianguliert werden, d.h. bei dem angenäherten Datenformat handelt es sich um ein Dreiecksformat. Auf diese Weise ist die Erstellung des digitalen Prototypen unabhängig von den für die Konstruktion der einzelnen Bauteile verwendeten CAD-Systeme und für jedes Bauteil kann das für seine Konstruktion günstigste CAD-System verwendet werden.

Die Arbeitsplätze, an denen die einzelnen Bauteile des Gesamtprodukts rechnergestützt konstruiert werden, sind in der Regel weit verstreut und können sich an unterschiedlichen Stellen innerhalb eines Gebäudes, in unterschiedlichen Städten und sogar in unterschiedlichen Ländern befinden, sofern sie über ein Datenübertragungsnetz mit einer zentralen Stelle verbunden sind, welche somit auf die von den einzelnen Arbeitsplätzen erzeugten digitalen Bilddaten der einzelnen Bauteile automatisch zugreifen und daraus die digitale Abbildung des Gesamtprodukts erzeugen kann, welcher vorzugsweise für die nachfolgende Verifizierung ebenfalls zentral abgespeichert wird.

Die eigentliche Verifizierung der einzelnen Bauteile des Gesamtprodukts kann sowohl zentral als auch dezentral erfolgen. Die zentrale Verifizierung des digitalen Prototypen bzw. dessen Bauteile besitzt den Vorteil, daß hierzu lediglich geringe Eingriffe in den üblichen Entwicklungsprozeß erforderlich sind, während die dezentrale Verifizierung vorteilhafterweise jedem Konstrukteur an seinem Arbeitsplatz die Möglichkeit gibt, selbst das von ihm augenblicklich konstruierte Bauteil in Bezug auf den zentral gespeicherten digitalen Prototypen zu verifizieren, so daß in diesem Fall nochmals eine Beschleunigung des Konstruktionsprozesses ermöglicht wird. Darüber hinaus ermöglicht die vorliegende Erfindung auch die Integration von Zulieferern in den Entwicklungsprozeß, da diese über das Datenübertragungsnetz, beispielsweise über das Internet, in die Verifizierung des digitalen Prototypen eingebunden werden können.

Die vorliegende Erfindung eignet sich insbesondere für einen Einsatz in der Kraftfahrzeug-, Luft-, Raumfahrt-, Schiffbau- und/oder Konsumgüterindustrie (Haushaltsgeräte), wo äußerst komplex aufgebaute Produkte zu entwickeln sind.

Die Erfindung ermöglicht nicht nur eine wesentliche Reduzierung der Entwicklungszeit und der Entwicklungskosten, sondern erzielt gleichzeitig eine wesentliche Verbesserung der Qualität bei der Entwicklung des Gesamtprodukts, da bereits während der Konstruktionsphase automatisch Rückmeldungen über Fehler bei der Konstruktion der einzelnen Bauteile generiert und an die zuständigen Konstruktionsarbeitsplätze rückgemeldet werden, so daß diese Fehler rechtzeitig behoben werden können. Insbesondere werden die Fehler bereits aufgespürt, bevor durch sie tatsächlich Kosten entstehen können. Nach allgemeiner Erfahrung kann der Entwicklungsprozeß bereits nach einem Jahr in Bezug auf die benötigte Zeit und die zu investierenden Kosten um mindestens 40% optimiert werden. Zur Verifizierung der Baubarkeit des Gesamtprodukts ist nicht mehr der physikalische Bau eines Prototypen erforderlich, da die Verifizierung auf digitaler Ebene anhand des digitalen Prototypen, d.h. anhand der digitalen Abbildung des Gesamtprodukts, erfolgt.

Insbesondere werden durch die vorliegende Erfindung die brachliegenden Potentiale in der Entwicklung aktiviert. Die Möglichkeiten einer Kostensenkung sind im Produktionsbereich durch 'Just-In-Time-Verfahren' und nahezu optimale Fertigungsstraßen heutzutage bereits weitgehend ausgereizt. Obwohl die Entwicklungskosten verglichen mit den Gesamtkosten zur Herstellung eines Autos oder Flugzeugs relativ gering sind und lediglich ca. 5-6% der Gesamtkosten ausmachen, werden in der Entwicklung ca. 70% der endgültigen Produktionskosten bestimmt. Hier setzt die vorliegende Erfindung an. Mit der vorliegenden Erfindung lassen sich bereits im Entwicklungs- oder Konstruktionsprozeß Fehler einfach und zuverlässig beseitigen. Jeder Konstrukteur kann aufgrund der automatischen Verifizierung des digitalen Prototypen absolut sicher sein, daß das von ihm konstruierte Bauteil auch beim abschließenden physikalischen Zusammenbau paßt, da seine Konstruktion von Anfang an automatisch in Bezug auf das Gesamtprodukt und die anderen Bauteile oder Baugruppen verifiziert worden ist. Da somit bereits in einem sehr frühen Stadium der Entwicklung viele Informationen über das gewünschte Gesamtprodukt verfügbar sind, kann beispielsweise auch der Zeitpunkt des Beginns einer Serienfertigung genauer abgeschätzt werden.

Die Erfindung wird nachfolgend anhand bevorzugter Ausführungsbeispiele unter Bezugnahme auf die beigefügte Zeichnung näher erläutert.
Fig. 1 zeigt ein vereinfachtes Blockschaltbild zur Erläuterung eines ersten Ausführungsbeispiels der vorliegenden Erfindung, und
Fig. 2 zeigt ein vereinfachtes Blockschaltbild zur Erläuterung eines zweiten Ausführungsbeispiels der vorliegenden Erfindung.

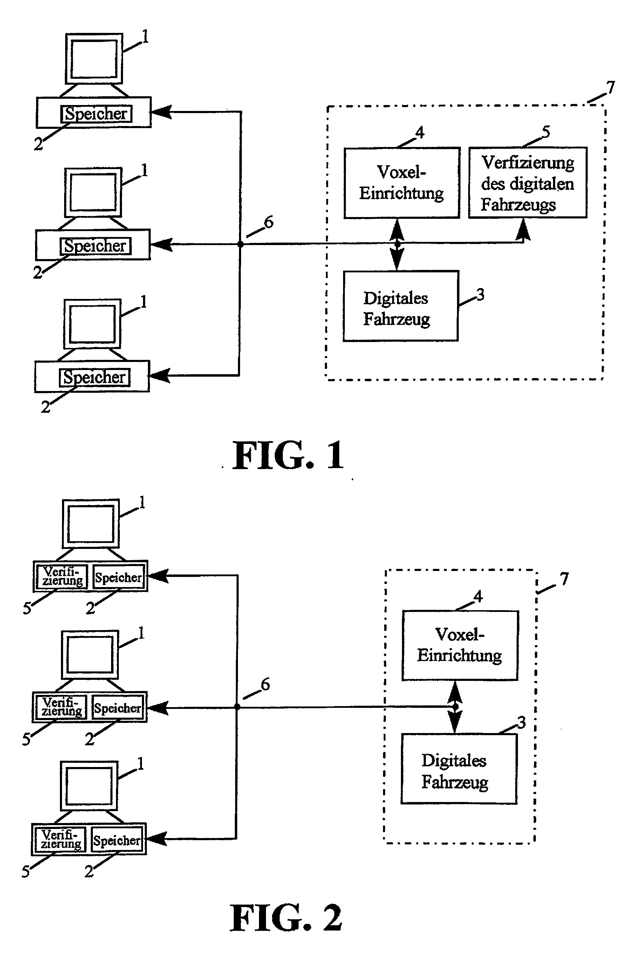

Bei dem in Fig. 1 gezeigten System werden die einzelnen Bauteile eines Produkts, beispielsweise eines Autos oder Flugzeugs, an unterschiedlichen Arbeitsplätzen 1 rechnergestützt konstruiert. Die in Fig. 1 gezeigten Arbeitsplatzrechner 1 entsprechen dabei CAD-Systemen, welche zu jeder augenblicklich gültigen Konstruktion des entsprechenden Bauteils digitale 3D-CAD-Bilddaten erzeugen und dieses Daten in Speichern 2 abspeichern und nach außen zugänglich machen. Die Speicher 2 sind in der Regel durch handelsübliche Massenspeicher (Festplatten) gebildet.

Die Arbeitsplatzrechner 1 können im Prinzip weltweit verstreut angeordnet sein, wobei jeder Arbeitsplatzrechner 1 über ein Datenübertragungsnetz 6 mit einer Zentraleinheit 7 verbunden ist, so daß die Zentraleinheit 7 auf die von den einzelnen Arbeitsplatzrechnern 1 angebotenen digitalen Bilddaten des jeweils konstruierten Bauteils zugreifen kann. Das Datenübertragungsnetz 7 kann sowohl kabelgebunden als auch kabellos ausgestaltet sein. Entscheidend alleine ist, daß eine Datenübertragung zwischen den Arbeitsplatzrechnern 1 und der Zentraleinheit 7 möglich ist. So ist insbesondere auch eine Datenübertragung über das Internet oder eine Funkübertragung, beispielsweise über ein Mobilfunknetz, denkbar, wenn in die Arbeitsplatzrechner 1 und die Zentraleinheit 7 entsprechende Schnittstellen integriert werden.

Die Datenverwaltung ist auf den einzelnen Arbeitsplatzrechner 1 bzw. in deren Speicher 2 derart durch Datenverwaltungssyteme (Product Data Management (PDM)-Systeme) oder Verzeichnisstrukturen organisiert, daß jeder Konstrukteur an jedem Arbeitsplatzrechner 1 festlegen kann, welche Daten von außen von der Zentraleinheit 7 abfragbar und somit öffentlich zugänglich sein sollen. Auf diese Weise kann der Konstrukteur an einem Bauteil arbeiten, ohne die augenblicklich hinzugefügten Neuerungen sofort nach außen zugänglich zu machen. Die Bilddaten derjenigen Konstruktionsversion eines Bauteils, welche von der Zentraleinheit 7 abfragbar sein soll, werden beispielsweise ausschließlich unter einem hierzu eigens auf dem entsprechenden Arbeitsplatzrechner 1 angelegten Verzeichnis abgespeichert. Ebenso können die Daten derjenigen Konstruktionsversionen, welche nicht für die Zentraleinheit 7 zugänglich sein sollen, durch entsprechenden Datenattribute geschützt werden usw..

Wie in Fig. 1 gezeigt ist, umfaßt die Zentraleinheit 7 eine sogenannte Voxel-Einrichtung 4, deren Aufgabe es ist, die von den Arbeitsplatzrechnern 1 bereitgestellten digitalen Bilddaten der einzelnen Bauteile zu einer digitalen Abbildung des Gesamtprodukts, dem sogenannten digitalen Prototypen, zusammenzufügen. In der Regel werden jedoch an jedem Arbeitsplatzrechner I unterschiedliche CAD-Systeme eingesetzt, d.h. für jedes Bauteil wird vorzugsweise dasjenige CAD-System verwendet, welches am besten für die Konstruktion dieses Bauteils geeignet ist. Demzufolge werden von den einzelnen Arbeitsplatzrechner 1 für die einzelnen Bauteile digitale Bilddaten angeboten, welche in unterschiedlichen Datenformaten vorliegen können. Zudem handelt es sich meistens um sehr große Datenmengen, welche von den Arbeitspatzrechnern 1 bereitgestellt werden. Die Voxel-Einrichtung 4 ist daher derart ausgestaltet, daß sie diese unterschiedlichen und das jeweilige Bauteil exakt beschreibenden digitalen Bilddaten aus den unterschiedlichen CAD-Systemen in ein neutrales, angenähertes Datenformat konvertiert, welches auf das Wesentliche reduzierte ist. Dieses Datenformat wird auch als Voxelformat bezeichnet . Die von den einzelnen Arbeitsplatzrechnern 1 bereitgestellten CAD-Modelle der Bauteile des zu entwickelnden Produkts werden zur Konvertierung in die entsprechenden Voxel-Modelle trianguliert, wobei gleichzeitig das anfallende Datenvolumen um bis zu ca. 80% reduziert wird, so daß die Visualisierung beispielsweise kompletter Fahrzeuge möglich ist. Zu diesem Zweck setzt die Voxel-Einrichtung 4 die infolge der Datenkonvertierung aus den CAD-Modellen der einzelnen Bauteile gewonnenen Voxel-Modelle zu dem bereits zuvor erwähnten digitalen Prototypen zusammen, der in einer hierzu vorgesehenen Speichereinrichtung 3 zentral abgespeichert wird. Die Voxel-Einrichtung 4 bildet auf diese Weise den DMU (Digital Mockup) des zu entwickelnden Gesamtprodukts.

Die Erstellung der Voxel-Modelle bzw. des DMU des Gesamtprodukts durch die zuvor beschriebene Voxel-Einrichtung 4 setzt voraus, daß von den einzelnen Arbeitsplatzrechnern 1 digitale 3D-CAD-Bilddaten geliefert werden, wobei die einzelnen CAD-Modelle der Arbeitsplatzrechner 1 in dem entsprechenden Speicher 2 jeweils in Bezug auf das Gesamtprodukt positioniert abgespeichert sein müssen. Ist dies nicht möglich, muß zumindest eine Lageinformation über die Lage des entsprechenden Bauteils in dem Gesamtprodukt vorhanden und abgespeichert sein. Darüber hinaus darf kein für die Zentraleinheit 7 zugängliches CAD-Modell eines Bauteils Geometrieelemente von Nachbarmodellen oder Nachbarbauteilen enthalten. Des weiteren kann die Prozeßsicherheit erheblich verbessert werden, wenn sich bereits aus dem Namen des jeweils abgespeicherten CAD-Modells eindeutig der jeweils zuständige Konstrukteur und die Version des Modells ergibt. Je strukturierter die CAD-Modelle auf den Arbeitsplatzrechnern 1 bzw. in den Speichern 2 abgelegt werden, desto einfacher kann der in der Speichereinrichtung 3 abgelegte digitale Prototyp von der Voxel-Einrichtung 4 als Abbild ständig auf dem neuesten Stand gehalten werden.

Die Zentraleinheit 7 umfaßt des weiteren eine Verifizierungseinrichtung 5 zur Verifizierung des auf diese Weise erzeugten und in der Speichereinrichtung 3 abgelegten digitalen Prototypen. Diese Verifizierungseinrichtung 5 überprüft anhand des digitalen Prototypen, ob sämtliche Bauteile des Gesamtprodukts in ihrer Gesamtheit zusammenpassen. Dabei werden insbesondere in dem digitalen Prototypen benachbarte Bauteile hinsichtlich möglicher Kollisionen und hinsichtlich der Einhaltung vorgegebener Mindestabstände vollautomatisch überprüft. Darüber hinaus ist die Verifizierungseinrichtung 5 derart ausgestaltet, daß sie neben dem zuvor beschriebenen sogenannten statischen Geometriecheck auch eine dynamische Überprüfung der Ein- und Ausbauwege der einzelnen Bauteile sowie der eingesetzten Werkzeuge durchführt, um mögliche Probleme bei der Montage der Bauteile festzustellen. Die bei dieser Verifizierung gefundenen kollisionsfreien Ein- und Ausbauwege werden anschließend von der Verifizierungseinrichtung in Form eines Hüllvolumens dargestellt, wobei jedes Hüllvolumen einem statischen Platzhalter entspricht, welcher in dem digitalen Prototypen abgespeichert jedem Konstrukteur auf einen freizuhaltenden Bauraum hinweist.

Die in Fig. 1 gezeigten Einrichtungen 3-5 der Zentraleinheit 7 können in einem zentralen Rechner oder Server realisiert sein. Insbesondere können die Funktionen der Voxel-Einrichtung 4 und der Verifizierungseinrichtung in Form von auf diesem Zentralrechner 7 ablaufenden Softwaremodulen implementiert sein.

Die von der Voxel-Einrichtung 4 benötigten digitalen Bilddaten der einzelnen Arbeitsplatzrechner 1 werden vorzugsweise in regelmäßigen Abständen abgefragt, so daß ebenfalls in regelmäßigen Abständen von der Verifizierungseinrichtung 5 der digitale Prototyp einer Gesamtanalyse unterzogen werden kann. Dies kann durch entsprechend programmierte Batchabläufe realisiert sein, wobei in diesem Fall insbesondere auch die Möglichkeit gegebene ist, die zur Erstellung des digitalen Prototypen und dessen Verifizierung erforderlichen und sehr aufwendigen Berechnungen im Hintergrund oder abends ablaufen zu lassen, um auf diese Weise eine optimale Auslastung des den Einrichtungen 4 und 5 zugeordneten Rechners zu gewährleisten und eine Blockade dieses Rechners zu vermeiden.

Von der Verifizierungseinrichtung 5 werden alle Geometrieunstimmigkeiten, wie insbesondere Kollisionen oder nicht eingehaltene Mindestabstände, identifiziert und mit Hilfe eines entsprechenden Ergebnismanagementsystems verwaltet und festgehalten. Dabei wird von der Verifizierungseinrichtung 5 ausgenützt, daß für jedes Bauteil auch dessen Nachbarbauteile bekannt sind, so daß nur diese in die Berechnungen zu einem Bauteil einbezogen werden müssen. Die abgespeicherten Ergebnisse der Verifizierung sind für alle am Entwicklungsprozeß Beteiligten einsehbar und können jederzeit von den Arbeitsplatzrechnern 1 aus abgerufen werden. Auf diese Weise gefundene Problemstellen werden von der Verifizierungseinrichtung 5 automatisch ermittelt und visuell dargestellt. An die einzelnen Arbeitsplatzrechner 1 werden nur die für den jeweiligen Konstrukteur relevanten Probleme mitgeteilt. Dies erfolgt insbesondere in Form einer automatisch an den entsprechenden Arbeitsplatzrechner 1 übermittelten Rückmeldung mit einem Bericht über die mit seinem Bauteil zusammenhängenden Problemstellen.

Mit Hilfe des in Fig. 1 gezeigten Systems kann somit parallel zur Konstruktion von der Zentraleinheit 7 ein digitaler Prototyp aufgebaut, gepflegt und in regelmäßigen Abständen auf seine Baubarkeit hin geprüft werden. Geometrieunstimmigkeiten werden somit nicht mehr im physikalischen Prototypen, sondern bereits parallel zur Konstruktionsphase anhand des digitalen Prototypen entdeckt und automatisch an die Konstrukteure gemeldet. Im Gegensatz zu dem eingangs beschriebenen Ansatz, bei dem die Anfertigung eines physikalischen Prototypen zur Überprüfung der Geometriestimmigkeit erforderlich ist, muß jeder Konstrukteur bei dem in Fig. 1 gezeigten System nicht mehr darauf achten, möglichst detaillierte Konstruktionsmodelle seines Bauteils abzuliefern. Selbst Platzhalter, die einen gewissen Bauraum abgrenzen sollen, können von jedem Konstrukteur in den digitalen Prototypen eingecheckt werden. Der Konstrukteur muß nicht mehr darauf warten, bis sein Bauteil gefertigt, geliefert und eingebaut worden ist. Auf diese Weise kann ein Prozeß, der normalerweise einige Wochen dauert, auf wenige Stunden reduziert werden.

Bei dem zuvor beschriebenen und in Fig. 1 gezeigten System ist eine Zentraleinheit 1 definiert, welche allein für eine zentrale Verifizierung des digitalen Prototypen und die Rückmeldung der dabei gewonnenen Ergebnisse an die Arbeitsplatzrechner 1 verantwortlich sind. Die einzelnen Konstrukteure sind dabei in die Verifizierung nicht eingebunden, sondern sie werden nur mit den Ergebnissen versorgt. Trotz der bei dem in Fig. 1 gezeigten System vollständig automatisierten Prozesse und Abläufe wird jedoch eine gewisse Zeit verstreichen, bis die Konstrukteure Rückmeldungen zu ihren augenblicklich konstruierten Bauteilmodellen erhalten.

In Fig. 2 ist eine Weiterbildung des in Fig. 1 gezeigten Systems dargestellt, wobei die sich entsprechenden Komponenten mit denselben Bezugszeichen versehene sind und auf eine wiederholte Beschreibung ihrer Funktionen unter Bezugnahme auf die Beschreibung zu Fig. 1 verzichtet wird.

Das in Fig. 2 gezeigte System unterscheidet sich von dem in Fig. 1 gezeigten System lediglich dadurch, daß nunmehr der zentral aufgebaute und zentral in der Speichereinrichtung 3 abgelegte digitale Prototyp für alle Beteiligten nutzbar gemacht wird. Jeder Arbeitsplatzrechner 1 umfaßt zu diesem Zweck eine Verifizierungseinrichtung 5, so daß jeder Konstrukteur in der Lage ist, dezentral das von ihm konstruierte Bauteil unter Verwendung der von seinem Arbeitsplatzrechnern erzeugten entsprechenden digitalen CAD-Daten gegen den zentral abgelegten digitalen Prototypen zu überprüfen. Jeder Konstrukteur kann durch einfachen Knopfdruck eine neue Version des von ihm zu konstruierenden Bauteils von seinem Arbeitsplatzrechner 1 aus in den digitalen Prototypen einchecken, damit dieser verifiziert werden kann. Jeder Konstrukteur ist somit direkt in den digitalen Prototypenbau integriert und die Kommunikationsschleife zwischen der Zentraleinheit 7 und dem Konstrukteur entfällt, da von der Verifizierungseinrichtung 5 des entsprechenden Arbeitsplatzrechners 1 die Ergebnisse der Verifizierung unmittelbar auf dem Bildschirm des Arbeitspatzrechners bzw. in dem jeweiligen CAD-System visualisiert werden können.

Auf diese Weise ist jeder Konstrukteur in der Lage, durch einen einfachen Knopfdruck seine tägliche Arbeit gegen das digitale Gesamtprodukt bzw. den digitalen Prototypen zu überprüfen. Der Konstruktionsprozeß kann somit weiter beschleunigt werden. Von der Verifizierungseinrichtung 5 der entsprechenden Arbeitsplatzrechners 1 muß lediglich das zu verifizierende CAD-Modell des entsprechenden Bauteils in ein Voxel-Modell umgewandelt und mit dem in der Speichereinrichtung 3 abgelegten digitalen Prototypen verglichen werden. Wurde bei dieser dezentralen Überprüfung kein Fehler festgestellt, kann der Konstrukteur die digitalen Bilddaten des überprüften Modells in der für die Zentraleinheit 7 zugänglichen Datenablage bzw. den Speichern 2 ablegen und die Zentraleinheit 7 darüber informieren, so daß anschließend von der Voxel-Einrichtung 4 der Zentraleinheit 7 auf Grundlage des somit verifizierten Bauteils eine neue Berechnung des digitalen Prototypen gestartet werden kann.

Die in Fig. 1 und 2 gezeigten Systeme können auch miteinander kombiniert werden, so daß sowohl eine dezentrale Verifizierung in den einzelnen Arbeitsplatzrechnern 1 als auch eine zentrale Verifizierung in der Zentraleinheit 7 möglich ist.

Sowohl das in Fig. 1 als auch das in Fig. 2 gezeigte System kann durch eine Integration von Bauteil-Zulieferern ergänzt werden. In diesem Fall sind an das Datenübertragungsnetz 6 nicht nur die Arbeitsplatzrechner 1 von Konstrukteuren, sondern auch die Rechner von Bauteil-Zulieferem angeschlossen, so daß von Zulieferern bereitzustellende Bauteile auch in die Berechnung des digitalen Prototypen und dessen Verifizierung eingebunden werden können, wobei im wesentlichen auf die obige Beschreibung zur Einbindung der Konstrukteure bzw. deren Arbeitsplatzrechner 1 verwiesen werden kann.

## Patentansprüche

1. Verfahren zur Erstellung eines aus mehreren Bauteilen bestehenden Produkts,
wobei jedes Bauteil rechnergestützt konstruiert, für jedes Bauteil digitale Bilddaten erzeugt und die digitalen Bilddaten der einzelnen Bauteile zu einer digitalen Abbildung des Produkts zusammengefügt werden,
**dadurch gekennzeichnet,**
**daß** während der Konstruktion der Bauteile die folgenden Schritte durchgeführt werden:
a) Automatisches Sammeln der dezentral erzeugten digitalen Bilddaten, welche den augenblicklichen Konstruktionen der einzelnen Bauteile entsprechen,
b) Automatisches zentrales Zusammenfügen dieser augenblicklich gültigen digitalen Bilddaten der einzelnen Bauteile zu der digitalen Abbildung des Produkts, und
c) Automatisches Überprüfen der Paßform der einzelnen Bauteile in der digitalen Abbildung des Produkts.

2. Verfahren nach Anspruch 1,
**dadurch gekennzeichnet,**
**daß** die Bauteile während des Schritts c) anhand der digitalen Abbildung des Produkts automatisch auf Kollisionen mit den anderen Bauteilen, auf Mindestabstände zu den anderen Bauteilen und/oder auf kollisionsfreie Montagewege überprüft werden.

3. Verfahren nach Anspruch 1 oder 2,
**dadurch gekennzeichnet,**
**daß** im Schritt a) für die digitalen Bilddaten der einzelnen Bauteile unterschiedliche Bilddatenformate verwendet werden, und
**daß** im Schritt b) die unterschiedlichen Bilddatenformate zur Erzeugung der digitalen Abbildung des Produkts durch Triangulierung der entsprechenden digitalen Bilddaten in ein gemeinsames, angenähertes Bilddatenformat mit reduziertem Datenumfang umgesetzt werden, wobei aus diesem angenäherten Bilddatenformat die digitale Abbildung des Produkts erzeugt wird.

4. Verfahren nach einem der vorhergehenden Ansprüche,
**dadurch gekennzeichnet,**
**daß** die für jedes Bauteil des Produkts augenblicklich gültigen digitalen Bilddaten dezentral an unterschiedlichen Arbeitsplätzen (1) erzeugt werden, und
**daß** die somit dezentral erzeugten augenblicklich gültigen digitalen Bilddaten der einzelnen Bauteile automatisch über ein Datenübertragungsnetz (6) gesammelt und zentral zu der digitalen Abbildung des Produkts zusammengefügt werden.

5. Verfahren nach Anspruch 4,
**dadurch gekennzeichnet,**
**daß** automatisch in regelmäßigen Abständen anhand der zentral gespeicherten digitalen Bilddaten der einzelnen Bauteile eine neue digitale Abbildung des Produkts zentral ermittelt und abgespeichert wird.

6. Verfahren nach Anspruch 4 oder 5,
**dadurch gekennzeichnet,**
**daß** der Schritt c) in regelmäßigen Abständen zentral durchgeführt und nach der Durchführung des Schritts c) automatisch jedem Arbeitsplatz (1) über das Datenübertragungsnetz (6) eine Rückmeldung über das Ergebnis der durchgeführten Überprüfung übermittelt wird.

7. Verfahren nach Anspruch 4 oder 5,
**dadurch gekennzeichnet,**
**daß** der Schritt c) dezentral an dem dem jeweils zu überprüfenden Bauteil zugeordneten Arbeitsplatz (1) durch automatischen Zugriff auf die zentral gespeicherte digitale Abbildung des Produkts durchgeführt und von dem entsprechenden Arbeitsplatz (1) automatisch eine Rückmeldung über das Ergebnis der durchgeführten Überprüfung erzeugt wird.

8. System zur Erstellung eines aus mehreren Bauteilen bestehenden Produkts,
mit mehreren Bilddaten-Erzeugungseinrichtungen (1) zum rechnergestützten Konstruieren eines Bauteils des Produkts und zum automatischen Erzeugen von digitalen Bilddaten des jeweils konstruierten Bauteils,
**dadurch gekennzeichnet,**
**daß** die einzelnen Bilddaten-Erzeugungseinrichtungen (1) über ein Datenübertragungsnetz (6) mit einer Produktabbildung-Erzeugungseinrichtung (3, 4) zum automatischen Erzeugen einer digitalen Abbildung des Produkts durch Zusammenfügen der von den Bilddaten-Erzeugungseinrichtungen (1) bereitgestellten digitalen Bilddaten der einzelnen Bauteile verbunden sind, und
**daß** mit dem Kommunikationsnetz (6) Verifizierungsmittel (5) gekoppelt und derart ausgestaltet sind, daß sie durch Zugriff auf die von der Produktabbildung-Erzeugungseinrichtung (3, 4) erzeugten digitalen Abbildung des Produkts automatisch die Lage der einzelnen Bauteile in der digitalen Abbildung des Produkts überprüfen.

9. System nach Anspruch 8,
**dadurch gekennzeichnet,**
**daß** die Bilddaten-Erzeugungseinrichtungen (1) derart ausgestaltet sind, daß sie die digitalen Bilddaten der einzelnen Bauteile in unterschiedlichen Bilddatenformaten bereitstellen, und
**daß** die Produktabbildung-Erzeugungseinrichtung (3, 4) derart ausgestaltet ist, daß sie die unterschiedlichen Bilddatenformate zur Erzeugung der digitalen Abbildung des Produkts durch Tringulierung der entsprechenden digitalen Bilddaten in ein gemeinsames, angenähertes Bilddatenformat mit reduziertem Datenumfang umsetzt und aus diesem angenäherten Bilddatenformat die digitale Abbildung des Produkts erzeugt.

10. System nach Anspruch 8 oder 9,
**dadurch gekennzeichnet,**
**daß** die Produktabbildung-Erzeugungseinrichtung (4) derart ausgestaltet ist, daß sie automatisch in regelmäßigen Abständen anhand der von den einzelnen Bilddaten-Erzeugungseinrichtungen (1) bereitgestellten digitalen Bilddaten der einzelnen Bauteile eine neue digitale Abbildung des Produkts ermittelt und zentral in Produktabbildung-Speichermitteln (3) abspeichert..

11. System nach einem der Ansprüche 8-10,
**dadurch gekennzeichnet,**
**daß** die Verifizierungsmittel (5) zentral für sämtliche Bilddaten-Erzeugungseinrichtungen (1) vorgesehen sind,
wobei die Verifizierungsmittel (5) derart ausgestaltet sind, daß sie in regelmäßigen Abständen durch Zugriff auf die von der Produktabbildung-Erzeugungseinrichtung (3, 4) erzeugte digitale Abbildung des Produkts automatisch die Lage der einzelnen Bauteile in Bezug auf die anderen Bauteile in der digitalen Abbildung des Produkts überprüfen und anschließend automatisch über das Datenübertragungsnetz (6) an die einzelnen Bilddaten-Erzeugungseinrichtungen (1) Rückmeldungen über das Ergebnis der durchgeführten Überprüfung übermitteln.

12. System nach einem der Ansprüche 8-10,
**dadurch gekennzeichnet,**
**daß** jeder Bilddaten-Erzeugungseinrichtung (1) dezentrale Verifizierungsmittel (5) zugeordnet sind, welche derart ausgestaltet sind, daß sie automatisch durch Zugriff auf die von der Produktabbildung-Erzeugungseinrichtung (3, 4) erzeugte digitale Abbildung des Produkts unter Verwendung der digitalen Bilddaten des augenblicklich an der jeweiligen Bilddaten-Erzeugungseinrichtung (1) konstruierten Bauteils die Lage dieses Bauteils in Bezug auf die anderen Bauteile in der digitalen Abbildung des Produkts überprüfen und eine entsprechende Rückmeldung über das Ergebnis der durchgeführten Überprüfung ausgeben.

## Claims

1. Method for creating a product consisting of a plurality of components, wherein construction of every component is computer-aided, digital picture data are generated for each component and the digital picture data of the individual components are combined into a digital image of the product, **characterised in that** during the construction of the components the following steps are carried out:
a) automatic gathering of the decentrally generated digital picture data corresponding to the structures of the individual components at the time,
b) automatic central combining of these digital picture data of the individual components valid at the time into the digital image of the product and
c) automatic checking of the register form of the individual components in the digital image of the product.

2. Method according to claim 1, **characterised in that** during step c) the components are automatically checked using the digital image of the product for collisions with the other components, for minimum distances from the other components and/or for collision-free assembly paths.

3. Method according to claim 1 or 2, **characterised in that** in step a) different picture data formats are used for the digital picture data of the individual components and in step b) the different picture data formats for generating the digital image of the product are converted by triangulating the corresponding digital picture data into a common approximated picture data format with reduced data size, the digital image of the product being generated from this approximated picture data format.

4. Method according to any one of the preceding claims, **characterised in that** the digital picture data valid at the time for each component of the product are generated decentrally at different workstations (1) and the thus decentrally generated digital picture data of the individual components valid at the time are gathered automatically via a data transmission network (6) and are combined centrally into the digital image of the product.

5. Method according to claim 4, **characterised in that** a new digital image of the product is centrally created and stored automatically at regular intervals using the centrally stored digital picture data of the individual components.

6. Method according to claim 4 or 5, **characterised in that** step c) is carried out centrally at regular intervals and after step c) has been carried out a feedback report on the result of the check carried out is communicated automatically to each workstation (1) via the data transmission network (6).

7. Method according to claim 4 or 5, **characterised in that** step c) is carried out decentrally at the workstation (1) assigned in each case to the component to be checked by automatic access to the centrally stored digital image of the product and a feedback report on the result of the check carried out is automatically generated by the corresponding workstation (1).

8. System for creating a product consisting of a plurality of components, with a plurality of picture data generating devices (1) for computer-aided construction of a component of the product and for automatic generation of digital picture data of the component constructed in each case, **characterised in that** the individual picture data generating devices (1) are connected via a data transmission network (6) to a product image generating device (3, 4) for automatic generation of a digital image of the product by combining the digital picture data of the individual components provided by the picture data generating devices (1) and verification means (5) are coupled to the communications network (6) and are designed in such a way that by access to the digital image of the product generated by the product image generating device (3, 4) they automatically check the position of the individual components in the digital image of the product.

9. System according to claim 8, **characterised in that** the picture data generating devices (1) are designed in such a way that they provide the digital picture data of the individual components in different picture data formats and the product image generating device (3, 4) is designed in such a way that it converts the different picture data formats for generating the digital image of the product by triangulating the corresponding digital picture data into a common approximated picture data format with reduced data size and generates the digital image of the product from this approximated picture data format.

10. System according to claim 8 or 9, **characterised in that** the product image generating device (4) is designed in such a way that it automatically creates a new digital image of the product at regular intervals using the digital picture data of the individual components provided by the individual picture data generating devices (1) and stores it centrally in product image memory means (3).

11. System according to any one of claims 8 to 10, **characterised in that** the verification means (5) are provided centrally for all the picture data generating devices (1), the verification means (5) being designed in such a way that by access to the digital image of the product generated by the product image generating device (3, 4) they automatically check the position of the individual components in relation to the other components in the digital image of the product at regular intervals and then automatically communicate feedback reports on the result of the check carried out to the individual picture data generating devices (1) via the data transmission network (6).

12. System according to any one of claims 8 to 10, **characterised in that** to each picture data generating device (1) are assigned decentral verification means (5) which are designed in such a way that by access to the digital image of the product generated by the product image generating device (3, 4), using the digital picture data of the component constructed on the respective picture data generating device (1) at the time, they automatically check the position of this component in relation to the other components in the digital image of the product and output a corresponding feedback report on the result of the check carried out.

## Revendications

1. Procédé pour élaborer un produit se composant de plusieurs éléments constitutifs, selon lequel chaque élément constitutif est conçu d'une manière assistée par ordinateur, des données image numériques sont générées pour chaque élément constitutif et les données image numériques des éléments constitutifs individuels sont réunies en une image numérique du produit,
**caractérisé**
**en ce qu'**au cours de la conception des éléments constitutifs, les étapes suivantes sont exécutées:
a) collecte automatique des données image numériques, générées de manière décentralisée, qui correspondent aux formes de conception momentanées des éléments constitutifs individuels,
b) réunion automatique centralisée de ces données image numériques, valides momentanément, des éléments constitutifs individuels pour former l'image numérique du produit, et
c) contrôle automatique de la mise en place des éléments constitutifs individuels dans l'image numérique du produit.

2. Procédé selon la revendication 1,
**caractérisé**
**en ce qu'**au cours de l'étape c), les éléments constitutifs font l'objet, sur la base de l'image numérique du produit, d'un contrôle automatique portant sur des interférences avec les autres éléments constitutifs, sur les espacements minimum vis-à-vis des autres éléments constitutifs et/ou sur des modes de montage sans interférence.

3. Procédé selon la revendication 1 ou 2,
**caractérisé**
**en ce qu'**à l'étape a), des formats différents de données image sont employés pour les données image numériques des éléments constitutifs individuels, et
**en ce qu'**à l'étape b), les formats différents de données image sont, en vue de la génération de l'image numérique du produit, convertis, par triangulation des données image numériques correspondantes, en un format commun, approximé, de données image à volume réduit de données, l'image numérique du produit étant alors générée à partir de ce format approximé de données image.

4. Procédé selon l'une des revendications précédentes,
**caractérisé**
**en ce que** les données image numériques valides momentanément pour chaque élément constitutif du produit, sont générées de manière décentralisée à des postes de travail différents (1), et
**en ce que** les données image numériques, valides momentanément, des éléments constitutifs individuels, ainsi générées de manière décentralisée, sont collectées automatiquement par l'intermédiaire d'un réseau de transmission de données (6) et sont réunies, d'une manière centralisée, sous forme de l'image numérique du produit.

5. Procédé selon la revendication 4,
**caractérisé**
**en ce qu'**à intervalles réguliers, une nouvelle image numérique du produit est établie automatiquement, de manière centralisée, sur la base des données image numériques des éléments constitutifs individuels mémorisées de manière centralisée, et est mise en mémoire.

6. Procédé selon la revendication 4 ou 5,
**caractérisé**
**en ce que** l'étape c) est exécutée à intervalles réguliers, de manière centralisée, et, après l'exécution de l'étape c), une information en retour sur le résultat du contrôle effectué est communiquée automatiquement à chaque poste de travail (1), par l'intermédiaire du réseau de transmission de données (6).

7. Procédé selon la revendication 4 ou 5,
**caractérisé**
**en ce que** l'étape c) est exécutée, de manière décentralisée, au poste de travail (1) associé à l'élément constitutif respectif à contrôler, par accès automatique à l'image numérique du produit mémorisée de manière centralisée, et une information en retour sur le résultat du contrôle effectué est générée automatiquement par le poste de travail correspondant (1).

8. Système pour élaborer un produit se composant de plusieurs éléments constitutifs, comportant plusieurs dispositifs générateurs de données image (1) pour la conception assistée par ordinateur d'un élément constitutif du produit et pour la génération automatique de données image numériques de l'élément constitutif respectivement conçu,
**caractérisé**
**en ce que** les différents dispositifs générateurs de données image (1) sont reliés, par l'intermédiaire d'un réseau de transmission de données (6), à un dispositif générateur d'image de produit (3, 4) destiné à générer automatiquement une image numérique du produit, par réunion des données image numériques des éléments constitutifs individuels, mises à disposition par les dispositifs générateurs de données image (1), et
**en ce que** des moyens de vérification (5) sont couplés au réseau de communication (6) et configurés d'une manière leur permettant, par accès à l'image numérique du produit générée par le dispositif générateur d'image de produit (3, 4), de contrôler automatiquement le positionnement des éléments constitutifs individuels dans l'image numérique du produit.

9. Système selon la revendication 8,
**caractérisé**
**en ce que** les dispositifs générateurs de données image (1) sont configurés d'une manière leur permettant de mettre à disposition les données image numériques des éléments constitutifs individuels sous des formats différents de données image, et
**en ce que** le dispositif générateur d'image de produit (3, 4) est configuré d'une manière lui permettant, en vue de la génération de l'image numérique du produit, de convertir les formats différents de données image, par triangulation des données image numériques correspondantes, en un format commun, approximé, de données image à volume réduit de données, et de générer, à partir de ce format approximé de données image, l'image numérique du produit.

10. Système selon la revendication 8 ou 9,
**caractérisé**
**en ce que** le dispositif générateur d'image de produit (4) est configuré d'une manière lui permettant d'établir automatiquement, à intervalles réguliers, une nouvelle image numérique du produit, sur la base des données image numériques des éléments constitutifs individuels, mises à disposition par les dispositifs générateurs de données image séparés (1), et de la mémoriser, de façon centralisée, dans des moyens de mémorisation d'image de produit (3).

11. Système selon l'une des revendications 8 à 10,
**caractérisé**
**en ce que** les moyens de vérification (5) sont prévus centralement pour l'ensemble des dispositifs générateurs de données image (1),
les moyens de vérification (5) étant alors configurés d'une manière leur permettant, à intervalles réguliers, de contrôler automatiquement, par accès à l'image numérique du produit générée par le dispositif générateur d'image de produit (3, 4), le positionnement des éléments constitutifs individuels par rapport aux autres éléments constitutifs, dans l'image numérique du produit, et de communiquer ensuite automatiquement aux dispositifs générateurs de données image séparés (1), par l'intermédiaire du réseau de transmission de données (6), des informations en retour sur le résultat du contrôle effectué.

12. Système selon l'une des revendications 8 à 10,
**caractérisé**
**en ce qu'**à chaque dispositif générateur de données image (1) sont associés des moyens de vérification décentralisés (5), qui sont configurés d'une manière leur permettant, par accès à l'image numérique du produit générée par le dispositif générateur d'image de produit (3, 4) et moyennant l'utilisation des données image numériques de l'élément constitutif mis au point momentanément au niveau du dispositif générateur de données image respectif (1), de contrôler automatiquement le positionnement de cet élément constitutif par rapport aux autres éléments constitutifs, dans l'image numérique du produit, et de délivrer en retour une information correspondante sur le résultat du contrôle effectué.
